# EUROPÄISCHE PATENTSCHRIFT

(11) **EP 1 929 382 B1**
(45) Veröffentlichungstag und Bekanntmachung des Hinweises auf die Patenterteilung: **26.05.2010**
(21) Anmeldenummer: 05796736.6
(22) Anmeldetag: 26.09.2005
(51) Int. Cl.: G05B 19/042

(54) **PARAMETRIERUNGSGERÄT UND VERFAHREN ZUM PARAMETRIEREN ELEKTRISCHER GERÄTE**
PARAMETERISATION DEVICE AND METHOD OR PARAMETERISING ELECTRICAL DEVICES
APPAREIL DE PARAMETRAGE ET PROCEDE DE PARAMETRAGE D'APPAREILS ELECTRIQUES

(43) Veröffentlichungstag der Anmeldung: 11.06.2008
(73) Patentinhaber: SIEMENS AKTIENGESELLSCHAFT, 80333 München (DE)
(72) Erfinder: BAUEREISS, Jürgen, 91413 Neustadt a.d. Aisch (DE); GOBLIRSCH, Rainer, 91074 Herzogenaurach (DE)
(86) Internationale Anmeldenummer: PCT/DE2005/001733
(87) Internationale Veröffentlichungsnummer: WO 2007/033622

(56) Entgegenhaltungen:
- EP-A- 1 343 271
- WO-A-2005/047994
- US-B1- 6 618 630

## Beschreibung

Die Erfindung bezieht sich auf ein Parametrierungsgerät zum Erzeugen von geräteindividuelle Betriebsparameter festlegenden Parametrierungssignalen für ein oder mehrere elektrische Geräte einer elektrischen Anordnung. Unter dem Begriff "Parametrieren" wird nachfolgend die Eingabe vorgegebener Betriebsparameter in elektrische Geräte verstanden, wobei die Betriebsparameter die Funktionsweise bzw. den Funktionsumfang der Geräte festlegen; die Eingabe der Betriebsparameter erfolgt mithilfe von Parametrierungssignalen, die die Betriebsparameter an die Geräte übermitteln.

Zur Planung und Projektierung elektrischer Anordnungen, beispielsweise komplexer elektrischer Anlagen - wie z. B. elektrischer Stationsleitsysteme -, sowie zur Parametrierung einzelner Geräte derartiger elektrischer Anordnungen - wie zum Beispiel von Schutzgeräten - stehen heutzutage kommerzielle Planungs- und Parametrierungshilfsmittel zur Verfügung. Ein bekanntes Parametrierungshilfsmittel (fachsprachlich auch "Parametrierungstool" genannt) wird beispielsweise durch das Parametrierungsprogramm DIGSI der Siemens AG gebildet; nach einer Installation auf einer Datenverarbeitungsanlage wird durch das Parametrierungsprogramm DIGSI ein Parametrierungsgerät gebildet.

Bei diesem vorbekannten Parametrierungstool müssen für jedes Gerät der elektrischen Anordnung die jeweiligen Betriebsparameter individuell vorgegeben werden. Stellt sich nach erfolgter Eingabe der Betriebsparameter - beispielsweise während der Inbetriebsetzungs- oder Testphase der elektrischen Anordnung heraus, dass einzelne Betriebsparameter ungünstig oder falsch gewählt worden sind, so muss eine Korrektur dieser Betriebsparameter im Parametrierungstool für jedes der betroffenen Geräte "von Hand" durchgeführt werden.

Ferner ist aus der US-Patentschrift US 6,618,630 B1 ein System zum Konfigurieren von Feldgeräten einer Prozesssteuerungs-Anlage bekannt, das eine Datenverarbeitungseinrichtung aufweist, in der ein Prozesssteuerungs-Konfigurationssystem und ein Feldgeräte-Managementsystem zusammengefasst sind.
Über diese Datenverarbeitungseinrichtung können mittels eines auf einer Anzeigeeinrichtung dargestellten Bedienbaums sowohl die gesamte Prozesssteuerungs-Anlage betreffende als auch gerätespezifische Konfigurationseinstellungen vorgenommen werden.

Der Erfindung liegt die Aufgabe zugrunde, ein Parametrierungsgerät anzugeben, das eine besonders große Bedienerfreundlichkeit aufweist und das insbesondere eine nachträgliche Änderung der Betriebsparameter elektrischer Geräte mit wenig Zeitaufwand und damit besonders kostengünstig ermöglicht.

Diese Aufgabe wird erfindungsgemäß durch ein Parametrierungsgerät mit den Merkmalen gemäß Anspruch 1 gelöst.

Danach ist ausgehend von einem Parametrierungsgerät der eingangs angegebenen Art erfindungsgemäß vorgesehen, dass das Parametrierungsgerät gerätespezifische Parameter, die für jedes Gerät der Anordnung individuell zugeordnet werden, und gerätegruppen-spezifische Parameter, die jeweils einer vorgegebenen Gruppe von Geräten identisch zugeordnet werden, unterschiedlich behandelt, indem es nach Änderung eines abgespeicherten gerätegruppen-spezifischen Parameters für eines der Geräte der jeweiligen Gruppe den geänderten Parameter in die abgespeicherten Parametersätze der übrigen Geräte dieser Gruppe - auf eine manuelle Bedieneingabe hin oder automatisch - kopiert. Eine Gerätegruppe kann durch eine Teilgruppe der Geräte der Anordnung oder auch durch alle Geräte der Anordnung gebildet sein.

Ein wesentlicher Vorteil des erfindungsgemäßen Parametrierungsgeräts ist darin zu sehen, dass eine Änderung gerätegruppen-spezifischer Parameter nur eine einzige Parameteränderungseingabe des Benutzers erfordert; denn bei Vorliegen eines Änderungsbefehls für eines der Geräte der Gruppe wird der geänderte gerätegruppen-spezifische Parameter - sei es auf einen manuellen Befehl oder automatisch - nicht nur im jeweiligen Gerät, für das die Änderung durchgeführt wird, sondern auch für alle übrigen Geräte dieser Gruppe geändert, die diesen Parameter in identischer Weise benutzen bzw. verarbeiten. Es ist bei dem erfindungsgemäßen Parametrierungsgerät also nicht erforderlich, einen gerätegruppen-spezifischen Parameter mehrfach oder gar für alle Geräte der jeweiligen Gerätegruppe zu ändern. Es ist stattdessen lediglich einmalig festzulegen, welche Parameter bei welchen Geräten identisch sein sollen; jedwede Änderung eines Parameterwertes bei einem Gerät wird nachfolgend auf alle Geräte der jeweiligen Gruppe automatisch oder auf einen manuellen Befehl hin übertragen.

Die Vorgabe der Zuordnung von Geräten zu Gerätegruppen und die Festlegung, welche Parameter eines jedes Gerätes gerätegruppen-spezifische Parameter sind, erfolgt vorzugsweise mit einem hierzu bereitgestellten Konfigurationsmodul des Parametrierungsgeräts.

Besonders zügig lassen sich die Betriebsparameter in das Parametrierungsgerät eingeben, wenn das Parametrierungsgerät bereits bei der erstmaligen Eingabe eines gerätegruppen-spezifischen Parameters für eines der Geräte diesen in die Datensätze der übrigen Geräte der jeweiligen Gerätegruppe kopiert. Für jeden gerätegruppen-spezifischen Parameter ist in diesem Falle für jede Gruppe jeweils nur eine einzige Eingabe erforderlich.

Ein automatisches Kopieren der gerätegruppen-spezifischen Parameter lässt sich besonders einfach durchführen, wenn für jede Gerätegruppe jeweils eines der Geräte der Gruppe als "Parametervorlage" definiert wird. Wird in diesem Falle der Parameter für dieses "ausgewählte" Gerät der Gerätegruppe geändert, erfolgt automatisch eine Anpassung dieses Parameters in den übrigen Geräten der jeweiligen Gerätegruppe. Entsprechendes gilt, wenn zu dem "ausgewählten" Gerät für einen gerätegruppen-spezifischen Parameter erstmals ein Parameterwert eingegeben wird; in diesem Falle erfolgt ein Übertragen dieses Parameterwertes in die übrigen Geräte der Gerätegruppe automatisch.

Alternativ kann das "Parameterkopieren", auch automatisch ausgelöst werden, wenn für ein beliebiges Gerät der Gerätegruppe ein gerätegruppen-spezifischer Parameter erstmals eingegeben oder geändert wird. In diesem Falle dient jedes Gerät der Gerätegruppe quasi als "Parametervorlage".

Als gerätegruppen-spezifische Parameter können beispielsweise folgende Parameter herangezogen werden: Bediensprache, Netzfrequenz, Einstellungen der Störschreibung (z. B. Fehlerprotokolle), Einstellungen der Zeitsynchronisierung, Einstellungen von Rangierungen (z. B. von Steuersignalen als Reaktion auf eingehende Meldungen) und Einstellungen für den Überstromzeitschutz oder für den Schalterversagerschutz. Vorzugsweise werden Geräte für Abgangsfelder, Geräte für Kupplungen und Geräte für Einspeisungen zu Gerätegruppen zusammengefasst, da diese üblicherweise identische gerätegruppen-spezifische Parameter aufweisen sollen.

Um eine Parametergruppenbildung und ein Kopieren von Parameterwerten zu vereinfachen, wird es als vorteilhaft angesehen, wenn die Parameter eine einheitliche Parameterstruktur aufweisen; eine besonders geeignete Parameterstruktur bildet beispielsweise der IEC61850-Standard.

Um ein einfaches Verwalten der Betriebsparameter zu ermöglichen, wird es als vorteilhaft angesehen, wenn die Speichereinrichtung zu jedem Betriebsparameter eine Kennung speichert, die angibt, ob der jeweilige Betriebsparameter ein gerätespezifischer Parameter oder ein gerätegruppen-spezifischer Parameter ist. Im Falle eines gerätegruppen-spezifischen Parameters wird bevorzugt zusätzlich abgespeichert, welche Geräte zu welcher Gerätegruppe gehören und den jeweiligen Parameter somit identisch aufweisen.

Zwecks einfacher Verwaltung der Parameter wird es als vorteilhaft angesehen, wenn die Speichereinrichtung gerätespezifische Parameter und gerätegruppen-spezifische Parameter in separaten Speicherbereichen abspeichert. Beispielsweise kann die Speichereinrichtung für jeden Parametersatz eines jeden Gerätes jeweils einen Parameterbereich für gerätespezifische Parameter und einen Parameterbereich für gerätegruppen-spezifische Parameter zur Verfügung stellen.

Die Erfindung bezieht sich außerdem auf ein Verfahren zum Erzeugen von geräteindividuelle Betriebsparameter festlegenden Parametrierungssignalen für elektrische Geräte einer elektrischen Anordnung, bei dem benutzerseitig gewünschte Betriebsparameter in eine Speichereinrichtung eingeben werden und für jedes benutzerseitig ausgewählte Gerät jeweils diejenigen Parametrierungssignale erzeugt werden, die den in der Speichereinrichtung abgespeicherten Betriebsparametern entsprechen.

Um bei einem solchen Verfahren eine besonders große Bedienerfreundlichkeit zu erreichen und zu ermöglichen, dass eine nachträgliche Änderung der Betriebsparameter mit wenig Zeitaufwand möglich ist, wird erfindungsgemäß vorgeschlagen, dass gerätespezifische Parameter, die für jedes Gerät der Anordnung spezifisch sind, und gerätegruppen-spezifische Parameter, die für eine vorgegebene Gruppe von Geräten identisch sein sollen, unterschiedlich behandelt werden, indem nach Änderung eines abgespeicherten gerätegruppen-spezifischen Parameters für eines der Geräte der geänderte Parameter in die abgespeicherten Parametersätze der übrigen Geräte der jeweiligen Gruppe kopiert wird.

Bezüglich der Vorteile des erfindungsgemäßen Verfahrens wird auf die obigen Ausführungen im Zusammenhang mit dem erfindungsgemäßen Parametrierungsgerät verwiesen.

Die Erfindung kann beispielsweise bei Stationsleitsystemen eingesetzt werden, die mit mehreren Feldgeräten, beispielsweise Schutzgeräten, ausgestattet sind. Beispielsweise wird in einem solchen Falle an zumindest eines der Feld- bzw. Schutzgeräte das erfindungsgemäße Parametrierungsgerät angeschlossen, das mit seiner Signalerzeugungseinrichtung die Parametrierungssignale erzeugt und diese in das Feld- bzw. Schutzgerät einspeist.

Die Erfindung wird nachfolgend anhand eines Ausführungsbeispiels erläutert. Dabei zeigen
- Figur 1: ein Ausführungsbeispiel eines erfindungsgemäßen Stationsleitsystems mit mehreren Schutzgeräten sowie einem daran angeschlossenen erfindungsgemäßen Parametrierungsgerät,
- Figur 2: ein Ausführungsbeispiel für den konkreten Aufbau des Parametrierungsgerätes gemäß Figur 1,
- Figur 3: beispielhaft eine Ablaufdarstellung zur Eingabe von Datensätzen in das Parametrierungsgerät gemäß Figur 2 und
- Figur 4: beispielhaft eine Ablaufdarstellung zur Änderung eines Datensatzes in dem Parametrierungsgerät gemäß Figur 2.

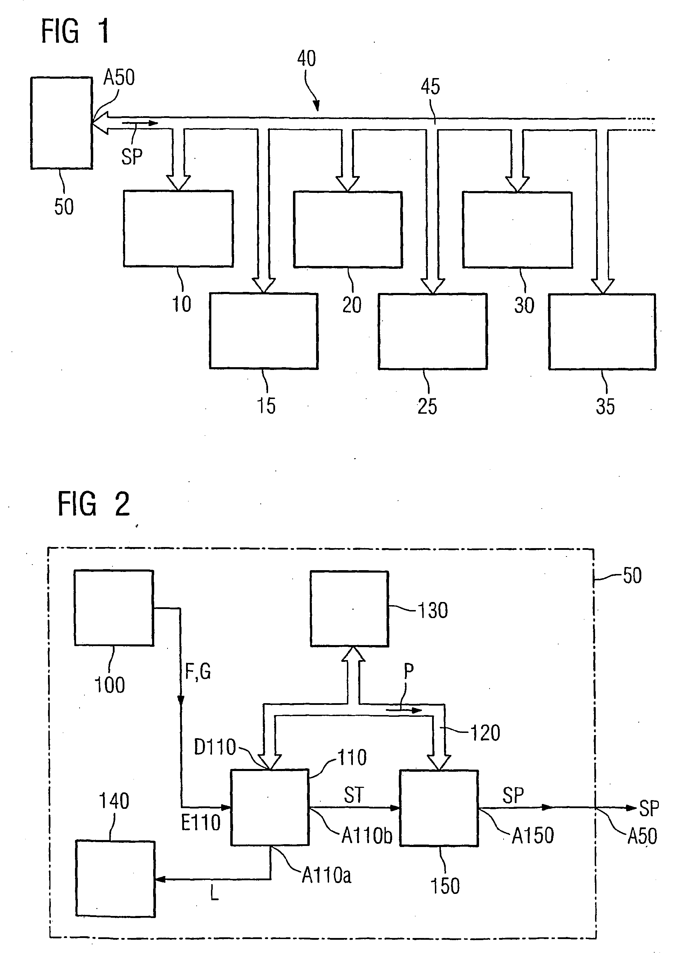

In der Figur 1 erkennt man sechs Schutzgeräte 10, 15, 20, 25, 30 und 35, die zu einem in der Figur 1 nicht weiter dargestellten Stationsleitsystem 40 gehören. Die sechs Schutzgeräte 10, 15, 20, 25, 30 und 35 sind mittels eines externen Datenbusses 45 mit einem Parametrierungsgerät 50 verbunden. Das Parametrierungsgerät 50 dient dazu, Parametrierungssignale SP zu erzeugen und diese zum Zwecke der Parametrierung zu den sechs Schutzgeräten 10, 15, 20, 25, 30 und 35 zu übertragen. Mit den Parametrierungssignalen SP wird die konkrete Funktionsweise der Schutzgeräte 10, 15, 20, 25, 30 und 35 definiert bzw. eingestellt.

In der Figur 2 ist der Aufbau des Parametrierungsgerätes 50 gemäß Figur 1 beispielhaft gezeigt. Man erkennt, dass das Parametrierungsgerät 50 eine Eingabeeinrichtung 100 aufweist, die mit einem Eingang E110 einer Verarbeitungseinrichtung 110 verbunden ist. Die Verarbeitungseinrichtung 110 ist über einen Datenanschluss D110 mit einem internen Datenbus 120 verbunden, der mit einer Speichereinrichtung 130 in Verbindung steht.

Die Verarbeitungseinrichtung 110 steht außerdem mittels eines Ausgangs A110a sowie mittels eines weiteren Ausgangs A110b mit einer Ausgabeeinrichtung 140 sowie mit einer Signalerzeugungseinrichtung 150 in Verbindung. Ein Ausgang A150 der Signalerzeugungseinrichtung 150 bildet den Ausgang A50 des Parametrierungsgerätes 50, der mit dem externen Datenbus 45 gemäß Figur 1 verbunden ist.

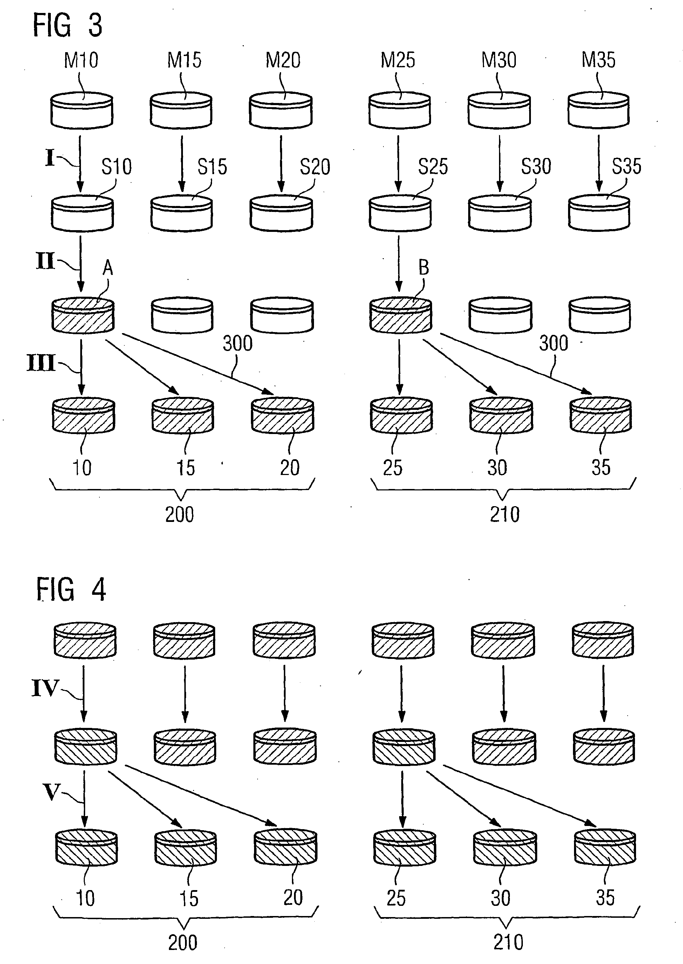

Die Funktionsweise der Anordnung gemäß Figur 1 sowie die Funktionsweise des Parametrierungsgerätes 50 gemäß Figur 2 werden nachfolgend im Detail anhand der Figur 3 erläutert:

Nach Anlage eines Speicherbereiches M10, M15, M20, M25, M30 bzw. M35 für jedes der sechs Schutzgeräte 10, 15, 20, 25, 30 und 35 in der Speichereinrichtung 130 wird zunächst mit dem Parametrierungsgerät 50 festgelegt, welche Parameter der sechs Schutzgeräte gerätespezifische Parameter und welche gerätegruppen-spezifische Parameter sind. Unter gerätespezifischen Parametern sind solche zu verstehen, die jedem Schutzgerät individuell zugeordnet werden; gerätegruppen-spezifische Parameter sind solche, die jeweils einer vorgegebenen Gruppe von Geräten identisch zugeordnet werden.

Nachfolgend wird beispielhaft davon ausgegangen, dass den drei Schutzgeräten 10, 15 und 20 die Parameter A1 bis An mit jeweils denselben Parameterwerten zugeordnet werden sollen. Die Parameter A1 bis An bilden somit gerätegruppen-spezifische Parameter und einen ersten übereinstimmenden Teilparametersatz A; die Schutzgeräte 10, 15 und 20 bilden diesbezüglich eine erste Gerätegruppe 200 mit übereinstimmenden Parametern.

Die drei Schutzgeräte 25, 30 und 35 bilden in entsprechender Weise eine zweite Gerätegruppe 210; bei dieser zweiten Gerätegruppe 210 sind die Parameter B1 bis Bm identisch, die einen zweiten Teilparametersatz B bilden.

Darüber hinaus können noch weitere gerätegruppen-spezifische Parameter vorhanden sein, die weitere Teilparametersätze für weitere Gerätegruppen bilden; beispielsweise könnte eine dritte Gerätegruppe durch die Schutzgeräte 10, 20 und 30 gebildet werden, bei denen andere Parameter C1 bis Cq mit identischen Parameterwerten parametriert werden sollen. Dies ist aus Gründen der Übersicht jedoch in der Figur 3 nicht weiter dargestellt; in der Figur 3 werden beispielhaft lediglich zwei Teilparametersätze A und B gezeigt, die zu den beiden Gruppen 200 und 210 gehören. Die nachfolgenden Erläuterungen beziehen sich daher beispielhaft auf die beiden Gerätegruppen 200 und 210.

Beispielsweise werden in einem ersten Parametrisierungsschritt I zunächst die gerätespezifischen Parameter für jedes der Schutzgeräte festgelegt; die Bezugszeichen S10, S15, S20, S25, S30 und S35 bezeichnen in der Figur 3 die Datensätze mit den gerätespezifischen Parametern.

In einem zweiten Parametrisierungsschritt II werden die gerätegruppen-spezifischen Parameter eingegeben. Hierzu wird in dem Schutzgerät 10 der erste Teilparametersatz A mit den gerätegruppen-spezifischen Parametern A1 bis An abgespeichert; dies ist in der Figur 3 durch das Bezugszeichen A angedeutet. In entsprechender Weise wird in dem Schutzgerät 25 der zweite Teilparametersatz B mit den gerätegruppen-spezifischen Parametern B1 bis Bn abgespeichert; dies ist in der Figur 3 durch das Bezugszeichen B angedeutet.

Nachfolgend werden auf eine manuelle Eingabe hin oder automatisch, also ohne dass eine erneute Eingabe der Teilparametersätze A oder B erforderlich wäre, die gerätegruppen-spezifischen Parametern A1 bis A1 und B1 bis Bm in die Geräte der jeweiligen Gerätegruppe 200 bzw. 210 im Rahmen eines Kopierschritts III kopiert. Der Kopiervorgang III ist durch Pfeile 300 angedeutet.

Soll nach erfolgter Parametrierung der Schutzgeräte beispielsweise nach Durchführung einer Testphase IV (vgl. Figur 4) eine Änderung eines oder aller der gerätegruppen-spezifischen Parameter A1 bis An des Teilparametersatzes A erfolgen, so müssen nicht alle Schutzgeräte 10, 15 und 20 einzeln umparametriert werden; es genügt, die Änderung einzelner oder aller Parameter des Teilparametersatzes A anhand des Schutzgerätes 10 durchzuführen und die geänderten Parameter in die Datensätze für die übrigen Schutzgeräte 15 und 20 zu kopieren (vgl. Kopierschritt V). Entsprechendes gilt für Änderungen des Teilparametersatzes B, die anhand des Schutzgerätes 25 durchgeführt und anschließend in die Datensätze der übrigen Schutzgeräte 30 und 35 der zweiten Gerätegruppe 210 kopiert werden können.

Bei den obigen Erläuterungen wurde davon ausgegangen, dass die Eingabe des Teilparametersatzes A sowie etwaige Änderungen des Teilparametersatzes A mit Bezug auf das Gerät 10 vorgenommen werden und der resultierende neue Teilparametersatz A nachfolgend in die Datensätze der übrigen Geräte 15 und 20 der ersten Gerätegruppe 200 kopiert wird. Eine entsprechende Eingabe des Teilparametersatzes A bzw. eine Änderung des Teilparametersatzes A kann stattdessen auch anhand eines anderen Gerätes 15 oder 20 der ersten Gerätegruppe 200 oder auch "abstrakt" für die erste Gerätegruppe 200 als solche erfolgen.

In entsprechender Weise kann eine Eingabe des Teilparametersatzes B sowie eine Änderung des Teilparametersatzes B anhand eines anderen Gerätes 30 oder 35 der zweiten Gerätegruppe 210 durchgeführt werden; die Auswahl des Gerätes 25 ist auch diesbezüglich nur beispielhaft zu verstehen. Alternativ kann auch eine Eingabe oder Änderung des Teilparametersatzes B "abstrakt" für die zweite Gerätegruppe 210 als solche erfolgen.

### Bezugszeichenliste

- 10: Schutzgerät
- 15: Schutzgerät
- 20: Schutzgerät
- 25: Schutzgerät
- 30: Schutzgerät
- 35: Schutzgerät
- 40: Stationsleitsystem
- 45: externer Datenbus
- 50: Parametrierungsgerät
- 100: Eingabeeinrichtung
- 110: Verarbeitungseinrichtung
- 120: interner Datenbus
- 130: Speichereinrichtung
- 140: Ausgabeeinrichtung
- 150: Signalerzeugungseinrichtung
- 200: erste Gerätegruppe
- 210: zweite Gerätegruppe
- S10: gerätespezifischer Datensatz
- S15: gerätespezifischer Datensatz
- S20: gerätespezifischer Datensatz
- S25: gerätespezifischer Datensatz
- S30: gerätespezifischer Datensatz
- S35: gerätespezifischer Datensatz
- A: erster gerätegruppen-spezifischer Teilparametersatz
- B: zweiter gerätegruppen-spezifischer Teilparametersatz
- SP: Parametrierungssignale

## Patentansprüche

1. Parametrierungsgerät (50) zum Erzeugen von Betriebsparameter festlegenden Parametrierungssignalen (SP) für elektrische Geräte (10, 15, 20, 25, 30, 35) einer elektrischen Anordnung (40),
- mit einer Eingabeeinrichtung (100), in die benutzerseitig gewünschte Betriebsparameter für jedes der Geräte eingebbar sind,
- mit einer Speichereinrichtung (130), in der die Parametersätze jeweils für jedes Gerät abgespeichert werden, und
- mit einer Signalerzeugungseinrichtung (150), die für jedes benutzerseitig ausgewählte Gerät jeweils diejenigen Parametrierungssignale erzeugt, die den in der Speichereinrichtung abgespeicherten Betriebsparametern entsprechen,
**dadurch gekennzeichnet, dass**
- das Parametrierungsgerät gerätespezifische Parameter (S10, S15, S20, S25, S30, S35), die jedem Gerät der Anordnung individuell zugeordnet werden, und gerätegruppen-spezifische Parameter (A, B), die jeweils einer vorgegebenen Gruppe von Geräten (200, 210) identisch zugeordnet werden, unterschiedlich behandelt, indem es nach Änderung eines abgespeicherten gerätegruppen-spezifischen Parameters für eines der Geräte (10, 25) der jeweiligen Gruppe den geänderten Parameter in die abgespeicherten Parametersätze der übrigen Geräte dieser Gruppe auf eine manuelle Bedieneingabe hin oder automatisch kopiert.

2. Parametrierungsgerät nach Anspruch 1,
**dadurch gekennzeichnet, dass**
das Parametrierungsgerät bereits bei der erstmaligen Eingabe eines gerätegruppen-spezifischen Parameters für eines der Geräte diesen in die Datensätze der übrigen Geräte der jeweiligen Gerätegruppe kopiert.

3. Parametrierungsgerät nach Anspruch 1 oder 2,
**dadurch gekennzeichnet, dass**
die Speichereinrichtung zu jedem Betriebsparameter eine Kennung speichert, die angibt, ob der jeweilige Betriebsparameter ein gerätespezifischer Parameter oder ein gerätegruppen-spezifischer Parameter ist.

4. Parametrierungsgerät nach einem der voranstehenden Ansprüche,
**dadurch gekennzeichnet, dass**
die Speichereinrichtung gerätespezifische Parameter und gerätegruppen-spezifische Parameter in separaten Speicherbereichen abspeichert.

5. Verfahren zum Erzeugen von geräteindividuelle Betriebsparameter festlegenden Parametrierungssignalen (SP) für elektrische Geräte (10, 15, 20, 25, 30, 35) einer elektrischen Anordnung (40), bei dem
- benutzerseitig gewünschte Betriebsparameter abgespeichert werden und
- für jedes benutzerseitig ausgewählte Gerät jeweils diejenigen Parametrierungssignale erzeugt werden, die den abgespeicherten Betriebsparametern entsprechen,
**dadurch gekennzeichnet, dass**
- gerätespezifische Parameter (S10, S15, S20, S25, S30, S35), die für jedes Gerät der Anordnung spezifisch sind, und gerätegruppen-spezifische Parameter (A, B), die für eine vorgegebene Gruppe (200, 210) von Geräten identisch sein sollen, unterschiedlich behandelt werden, indem nach Änderung eines abgespeicherten gerätegruppen-spezifischen Parameters für eines der Geräte (10, 25) der geänderte Parameter in die abgespeicherten Parametersätze der übrigen Geräte der jeweiligen Gruppe (200, 210) kopiert wird.

6. Verfahren nach Anspruch 5,
**dadurch gekennzeichnet, dass**
bereits bei der erstmaligen Eingabe eines als gerätegruppenspezifisch definierten Parameters dieser automatisch in die Datensätze der übrigen Geräte dieser Gruppe kopiert wird.

7. Verfahren nach einem der voranstehenden Ansprüche 5 bis 6,
**dadurch gekennzeichnet, dass**
zu jedem Betriebsparameter eine Kennung vorgegeben wird, die angibt, ob der jeweilige Betriebsparameter ein gerätespezifischer Parameter oder ein gerätegruppen-spezifischer Parameter ist.

8. Verfahren nach einem der voranstehenden Ansprüche 5 bis 7,
**dadurch gekennzeichnet, dass**
gerätespezifische Parameter und gerätegruppen-spezifische Parameter in separaten Speicherbereichen abgespeichert werden.

9. Verfahren nach einem der voranstehenden Ansprüche 5 bis 8,
**dadurch gekennzeichnet, dass**
Feldgeräte, insbesondere Schutzgeräte, eines Stationsleitsystems parametriert werden.

## Claims

1. Configuration appliance (50) for production of configuration signals (SP) which define operating parameters for electrical appliances (10, 15, 20, 25, 30, 35) in an electrical arrangement (40),
- having an input device (100) into which operating parameters which are desired at the user end can be entered for each of the appliances,
- having a memory device (130) in which the parameter sets are in each case stored for each appliance, and
- having a signal production device (150) which in each case produces those configuration signals which correspond to the operating parameters stored in the memory device, for each appliance which is selected at the user end,
**characterized in that**
- the configuration appliance deals differently with appliance-specific parameters (S10, S15, S20, S25, S30, S35) which are individually associated with each appliance in the arrangement, and appliance-group-specific parameters (A, B) which are associated identically with each predetermined group of appliances (200, 210), **in that**, after a change to a stored appliance-group-specific parameter for one of the appliances (10, 25) in the respective group, it copies the changed parameters to the stored parameter sets of the other appliances in this group in response to a manual control input, or automatically.

2. Configuration appliance according to Claim 1,
**characterized in that**,
when an appliance-group-specific parameter is entered for the first time for one of the appliances, the configuration appliance copies this parameter at this stage to the data records of the other appliances in the respective appliance group.

3. Configuration appliance according to Claim 1 or 2,
**characterized in that**
the memory device stores a tag for each operating parameter, indicating whether the respective operating parameter is an appliance-specific parameter or an appliance-group-specific parameter.

4. Configuration appliance according to one of the preceding claims,
**characterized in that**
the memory device stores appliance-specific parameters and appliance-group-specific parameters in separate memory areas.

5. Method for production of configuration signals (SP) which define appliance-specific operating parameters for electrical appliances (10, 15, 20, 25, 30, 35) in an electrical arrangement (40) in which
- operating parameters which are desired at the user end are stored, and
- those configuration signals which correspond to the stored operating parameters are in each case produced for each appliance selected at the user end,
**characterized in that**
- appliance-specific parameters (S10, S15, S20, S25, S30, S35) which are specific for each appliance in the arrangement and appliance-group-specific parameters (A, B) which are intended to be identical for a predetermined group (200, 210) of appliances are dealt with differently **in that**, after a change to a stored appliance-group-specific parameter for one of the appliances (10, 25), the changed parameter is copied to the stored parameter sets of the other appliances in the respective group (200, 210).

6. Method according to Claim 5, **characterized in that** when a parameter which is defined on an appliance-group-specific basis is entered for the first time, this parameter is automatically copied at this stage to the data records of the other appliances in this group.

7. Method according to one of the preceding Claims 5 to 6,
**characterized in that**
a tag is provided for each operating parameter and indicates whether the respective operating parameter is an appliance-specific parameter or an appliance-group-specific parameter.

8. Method according to one of the preceding Claims 5 to 7,
**characterized in that**
appliance-specific parameters and appliance-group-specific parameters are stored in separate memory areas.

9. Method according to one of the preceding Claims 5 to 8,
**characterized in that**
field appliances, in particular protective appliances, in a station control system are configured.

## Revendications

1. Appareil ( 50 ) de paramétrage pour produire des signaux ( SP ) de paramétrage fixant des paramètres de fonctionnement pour des appareils ( 10, 15, 20 25, 30, 35 ) électriques d'un agencement ( 40 ) électrique,
- comprenant un dispositif ( 100 ) d'entrée dans lequel des paramètres de fonctionnement souhaités côté utilisateur pour chacun des appareils peuvent être entrés,
- comprenant un dispositif ( 130 ) de mémoire dans lequel les jeux de paramètres respectivement pour chaque appareil sont mémorisés, et
- comprenant un dispositif ( 150 ) de production de signal qui produit pour chaque appareil choisi côté utilisateur respectivement les signaux de paramétrage qui correspondent aux paramètres de fonctionnement mémorisés dans le dispositif de mémoire,
**caractérisé en ce que**
- l'appareil de paramétrage traite différemment des paramètres ( S10, S15, S20, S25, S30, S35 ) spécifiques à un appareil, qui sont associés individuellement à chaque appareil de l'agencement, et des paramètres ( A, B ) spécifiques à un groupe d'appareils, qui sont associés de manière identique respectivement à un groupe prescrit d'appareils ( 200, 210 ), en copiant, sur une entrée de service manuelle ou automatiquement, après modification d'un paramètre spécifique à un groupe d'appareil qui a été mémorisé pour l'un des appareil ( 10, 25 ) du groupe respectif, le paramètre modifié dans les jeux de paramètre mémorisés des autres appareils de ce groupe.

2. Appareil de paramétrage suivant la revendication 1,
**caractérisé en ce que**
l'appareil de paramétrage copie, dès l'entrée la première fois d'un paramètre spécifique à un groupe d'appareils pour l'un des appareils, ce paramètre dans le jeu des données des autres appareils du groupe respectif d'appareils.

3. Appareil de paramétrage suivant la revendication 1 ou 2,
**caractérisé en ce que** le dispositif de mémoire mémorise, pour chaque paramètre de fonctionnement, une caractéristique qui indique si le paramètre de fonctionnement respectif est un paramètre spécifique à un appareil ou un paramètre spécifique à un groupe d'appareils.

4. Appareil de paramétrage suivant l'une des revendications précédentes,
**caractérisé en ce que** le dispositif de mémoire mémorise des paramètres spécifiques à un appareil et des paramètres spécifiques à un groupe d'appareils dans des zones de mémoire distinctes.

5. Procédé de production de signaux ( SP ) de paramétrage fixant des paramètres de fonctionnement individuels à un appareil pour des appareils ( 10, 15, 20, 25, 30, 35 ) électriques dans un agencement ( 40 ) électrique, dans lequel
- on mémorise des paramètres de fonctionnement souhaités côté utilisateur et
- pour chaque appareil choisi côté utilisateur, on produit respectivement les signaux de paramétrage qui correspondent aux paramètres de fonctionnement mémorisés,
**caractérisé en ce que**
- on traite de manière différente des paramètres ( S10, S15, S20, S25, S30, S35 ) spécifiques à un appareil, qui sont spécifiques à chaque appareil de l'invention, et des paramètres ( A, B ) spécifiques à un groupe d'appareils, qui doivent être identiques pour un groupe ( 200, 210 ) prescrit d'appareils, en copiant, après modification d'un paramètre d'appareil mémorisé spécifique à un groupe d'appareil pour l'un des appareil ( 10, 25 ), le paramètre modifié dans le jeu de paramètres mémorisés des autres appareils du groupe ( 200, 210 ) respectif.

6. Procédé suivant la revendication 5,
**caractérisé en ce que**, dès l'entrée pour la première fois d'un paramètre défini comme étant spécifique à un groupe d'appareils, on le copie automatiquement dans les jeux de données des autres appareils de ce groupe.

7. Procédé suivant l'une des revendications 5 à 6,
**Caractérisé en ce qu'**on prescrit, pour chaque paramètre de fonctionnement, une caractéristique qui indique si le paramètre de fonctionnement respectif est un paramètre spécifique à un appareil ou un appareil spécifique à un groupe d'appareil.

8. Procédé suivant l'une des revendications 5 à 7,
**caractérisé en ce que** l'on mémorise des paramètres spécifiques à un appareil et spécifiques à un groupe d'appareils dans des zones de mémoires distinctes.

9. Procédé suivant l'une des revendications 5 à 8,
**caractérisé en ce que** l'on paramètre des appareils sur site, notamment des appareils de protection d'un système de conduite de station.
